# EUROPÄISCHE PATENTSCHRIFT

(11) **EP 3 648 992 B1**
(45) Veröffentlichungstag und Bekanntmachung des Hinweises auf die Patenterteilung: **22.06.2022**
(21) Anmeldenummer: 18731753.2
(22) Anmeldetag: 06.06.2018
(51) Int. Cl.: B60G 7/00, F16C 11/06

(54) **ANORDNUNG MIT EINER WINKELMESSEINRICHTUNG UND MIT EINEM FAHRWERK EINES FAHRZEUGS**
ARRANGEMENT COMPRISING AN ANGLE MEASUREMENT DEVICE AND A CHASSIS OF A VEHICLE
ENSEMBLE AVEC UN DISPOSITIF DE MESURE D'ANGLE ET AVEC UN CHÂSSIS D'UN VÉHICULE

(30) Priorität: 04.07.2017 DE 102017211396
(43) Veröffentlichungstag der Anmeldung: 13.05.2020
(73) Patentinhaber: ZF Friedrichshafen AG, 88046 Friedrichshafen (DE)
(72) Erfinder: STRATMANN, Julian, 49152 Bad Essen (DE); BÄUMER, Florian, 49492 Westerkappeln (DE); HOLTHEIDE, Josef, 49434 Neuenkirchen (DE); KALLASS, Felix, 49084 Osnabrück (DE); SANDER, Thorsten, 32369 Rahden (DE)
(74) Vertreter: ZF Friedrichshafen AG
(86) Internationale Anmeldenummer: PCT/EP2018/064818
(87) Internationale Veröffentlichungsnummer: WO 2019/007613

(56) Entgegenhaltungen:
- WO-A1-2017/215838
- WO-A1-2018/210511
- DE-A1- 10 221 873
- DE-A1- 10 343 588
- DE-A1- 10 358 763
- DE-A1-102005 012 245
- DE-A1-102006 061 976
- FR-A1- 2 973 292
- JP-A- 2005 292 070

## Beschreibung

Die Erfindung betrifft eine Anordnung mit einer Winkelmesseinrichtung und mit einem Fahrwerk eines Fahrzeuges entsprechend den Merkmalen des Anspruchs 1.

Eine derartige Anordnung ist aus der JP 2005 292 070 A bekannt. Sie offenbart alle Merkmale des Patentanspruchs 1 mit Ausnahme, dass die Tasche als Vertiefung gegenüber dem Außenumfang des Auges ausgebildet ist. Stattdessen bildet ein radial nach außen aus einer Außenfläche eines ringförmig ausgebildeten Auges eines Lenkers hervorspringender Haken eine Art Tasche zum Aufnehmen eines Sensors.

Eine weitere Anordnung ist aus der WO2018/210511 A1 bzw. der EP3625470 A1 bekannt, wobei dieser Stand der Technik unter den Artikel 54(3) EPÜ fällt. Diese Anordnung offenbart alle Merkmale des Patentspruchs 1 mit Ausnahme, dass die Führungsflächen parallel ausgebildet sind.

Gemäß der FR 2 973 292 A1 umfasst eine Anordnung eine Winkelmesseinrichtung am Fahrwerk eines Fahrzeuges, wobei das Fahrwerk einen Lenker und ein Schwenklager mit einer Schwenkachse umfasst, wobei der Lenker um die Schwenkachse schwenkbar ist und wobei die Winkelmesseinrichtung einen Sensor und einen Signalgeber umfasst, wobei der Sensor am Lenker im Bereich der Schwenkachse und der Signalgeber am Schwenklager angeordnet sind und der Lenker lagerseitig ein ringförmig ausgebildetes Auge mit einer Aufnahmeöffnung für das Schwenklager aufweist.

Ähnliche Anordnungen sind auch aus der DE 102 21 873 A1 und DE 103 58 763 A1 bekannt, bei denen das Fahrwerk einen Lenker und ein Schwenklager mit einer Schwenkachse umfasst, wobei der Lenker um die Schwenkachse schwenkbar ist und wobei die Winkelmesseinrichtung einen Sensor und einen Signalgeber umfasst, wobei der Sensor am Lenker im Bereich der Schwenkachse und der Signalgeber am Schwenklager angeordnet sind.

Durch die DE 10 2006 061 976 A1 der Anmelderin wurde eine Radaufhängung für ein Fahrzeug bekannt, wobei ein Lenker über ein Lager schwenkbar am Aufbau des Fahrzeuges befestigt ist. An der Radaufhängung, im Folgenden auch Fahrwerk genannt, ist eine Winkelmesseinrichtung vorgesehen, mittels welcher eine Verschwenkung des Lenkers um die Schwenkachse des Lagers relativ zum Aufbau erfassbar ist. Die Winkelmesseinrichtung weist zwei Komponenten, einen Sensor und einen Signalgeber, auf, welche vorzugsweise als Magnetsensor und als Magnet ausgebildet sind. Nach einer bevorzugten Ausführungsform sind der Magnet außen am Lenker im Bereich der Schwenkachse und der Magnetsensor auf einer speziellen fahrzeugfesten Halterung angeordnet, so dass Magnet und Magnetsensor miteinander in Wirkverbindung stehen.

Eine Aufgabe der Erfindung besteht in einer verbesserten Anordnung einer Winkelmesseinrichtung, insbesondere eines Sensors und eines Signalgebers an relativ zueinander verschwenkbaren Fahrwerkskomponenten.

Die Erfindung umfasst die Merkmale des Patentanspruches 1. Vorteilhafte Ausgestaltungen ergeben sich aus den Unteransprüchen.

Erfindungsgemäß ist vorgesehen, dass der Sensor am Lenker im Bereich der Schwenkachse und der Signalgeber am Schwenklager angeordnet sind. Lenker und Schwenklager sind relativ zueinander um die mindestens eine Schwenkachse beweglich und können somit unterschiedliche Winkelpositionen zueinander einnehmen. Die jeweilige Winkelposition wird durch das Zusammenwirken von Signalgeber und Sensor erfasst. Gegenüber dem eingangs genannten Stand der Technik ergibt sich der Vorteil, dass für die Anbringung des Sensors keine zusätzliche Halterung erforderlich ist, da der Sensor direkt am Lenker im Bereich der Schwenkachse angeordnet ist. Durch die erfindungsgemäße Anordnung des Sensors ergibt sich ferner der Vorteil, dass der Sensor, der sich vorzugsweise in einem Sensorgehäuse befindet, gegen schädliche Einflüsse der Umgebung geschützt ist. Die Schwenkachse bzw. das Schwenklager kann radseitig, z. B. an einem Radträger oder fahrzeugseitig, z. B. an einem Hilfsrahmen oder einer Hinterachse angeordnet sein. In beiden Fällen wird die Winkelbewegung und die Winkelposition des Lenkers gegenüber dem Radträger oder dem Fahrzeug erfasst.

Erfindungsgemäß weist der Lenker lagerseitig ein ringförmig ausgebildetes Auge mit einer Aufnahmeöffnung auf, in welcher das Schwenklager, z. B. ein Gummilager aufgenommen ist.

Des Weiteren weist das ringförmige Auge erfindungsgemäß eine Außenfläche auf, auf welcher der Sensor angeordnet und befestigt ist. Der Sensor ist somit in radialer Richtung außerhalb des Signalgebers angeordnet und wird durch die Wandstärke des ringförmigen Auges vom Signalgeber getrennt.

Erfindungsgemäß ist in die Außenfläche eine Tasche in Form einer Vertiefung eingearbeitet, so dass der Sensor auf dem Lenker eine Führung, vorzugsweise in tangentialer Richtung erhält. Der Sensor ist am Lenker befestigt, was durch einen formschlüssigen Eingriff des Sensorgehäuses mit dem Lenker oder durch zusätzliche Verbindungsmittel, z. B. eine Verschraubung erfolgen kann. Die Tasche weist erfindungsgemäß zwei parallele Führungsflächen und eine stirnseitige Anschlagfläche auf. Die dritte Seite ist erfindungsgemäß offen, so dass der Sensor in die Tasche hineingeschoben und dort fixiert ist. Vorteilhaft bei dieser Anordnung ist der relativ geringe Abstand zwischen Sensor und Signalgeber, so dass das Magnetfeld des Signalgebers den Sensor ohne Schwächung oder Beeinträchtigung erreicht.

Nach einer weiteren bevorzugten Ausführungsform ist das Schwenklager als Kugelhülsengelenk ausgebildet, welches eine Hülse mit einem kugelförmigen Bereich aufweist. Die Aufnahmeöffnung des Lenkerauges ist als Kugelkalotte ausgebildet und kann somit den kugelförmigen Bereich der Hülse aufnehmen. Der Lenker ist somit in der Lage, nicht nur eine Schwenkbewegung um die Schwenkachse, d. h. die Längsachse der Kugelhülse auszuführen, sondern zusätzlich Schwenkbewegungen um senkrecht zu der Längsachse verlaufende Achsen (Querachsen). Darüber hinaus ergibt sich der Vorteil, dass der kugelförmige Bereich zusätzlichen Bauraum für die Unterbringung des Signalgebers bietet.

Nach einer weiteren bevorzugten Ausführungsform ist der Signalgeber im kugelförmigen Bereich der Hülse angeordnet. Durch diese Anordnung ist der Signalgeber geschützt vor schädlichen Einflüssen der unmittelbaren Umgebung.

Nach einer weiteren bevorzugten Ausführungsform ist der Signalgeber als Permanentmagnet ausgebildet. Der Permanentmagnet erzeugt, ohne dass Energie von außen zugeführt werden muss, ein Magnetfeld, welches mit dem radial außerhalb angeordneten Sensor in Wirkverbindung steht.

Nach einer weiteren bevorzugten Ausführungsform ist der Sensor als magnetempfindlicher Sensor, insbesondere als Hall-Sensor ausgebildet. Hall-Sensoren sind handelsübliche Bauelemente, welche auf eine Veränderung des Magnetfeldes mit einem Signal reagieren. Die Änderung des Magnetfeldes wird durch eine Relativbewegung zwischen dem Signalgeber, dem Magneten, und dem Sensor, dem Hall-Sensor, bewirkt.

Nach einer weiteren bevorzugten Ausführungsform ist der Permanentmagnet als Zylinder mit einer Zylinderachse ausgebildet, welche in radialer Richtung in Bezug auf die Schwenkachse verläuft. Nord- und Südpol des zylinderförmigen Magneten sind also radial ausgerichtet. Radial in Bezug auf die Schwenkachse und außerhalb des zylinderförmigen Magneten ist der magnetempfindliche Sensor, kurz auch Magnetsensor genannt, angeordnet. Bei der Montage des Magneten, respektive des Schwenklagers oder des Kugelhülsengelenks muss eine Justierung zwischen Magnet und Sensor erfolgen, damit der Magnet während des Betriebes im magnetempfindlichen oder "Sicht"-Bereich des Sensors bleibt.

Nach einer weiteren bevorzugten Ausführungsform kann der Signalgeber als Ringmagnet ausgebildet sein, d. h. als ein ringförmiger, in einer Ringnut der Kugelhülse angeordneter Magnet. Der Ringmagnet ist vorzugsweise als Polrad ausgebildet, wie es durch die DE 103 58 763 A1 der Anmelderin bekannt wurde. Dabei weist das Polrad mehrere radial magnetisierte Bereiche auf, wobei benachbarte Bereiche jeweils entgegengesetzte Magnetisierungsrichtungen aufweisen - es folgt also in Umfangsrichtung gesehen - jeweils ein Nordpol auf einen Südpol. Insofern ist der als Ringmagnet ausgebildete Signalgeber bei jeder Winkelposition im Sichtbereich des Sensors. Eine Justierung und/oder eine Fixierung in Umfangsrichtung des Ringmagneten in Bezug auf den Sensor ist hier nicht erforderlich. Insbesondere ist eine Ausrichtung des Ringmagneten als Signalgeber in Bezug auf den Sensor bei der Montage nicht erforderlich.

Nach einer weiteren bevorzugten Ausführungsform wird der Signalgeber durch eine Vielzahl von zylinderförmigen, bezüglich ihrer Zylinderachse radial ausgerichteten Einzelmagneten, verteilt auf dem Umfang, gebildet. Auch in diesem Falle ist eine Justierung und/oder Ausrichtung zwischen Signalgeber und Sensor, insbesondere bei einer Montage, nicht erforderlich.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
- Fig. 1: einen Fahrzeuglenker (teilweise) mit Sensor und Kugelhülsengelenk,
- Fig. 2: den Lenker gemäß Fig. 1 in einer Ansicht von oben,
- Fig. 3: den Lenker in einer Seitenansicht,
- Fig. 4: einen Radialschnitt durch das Kugelhülsengelenk mit einem Magnet und einem Sensor,
- Fig. 5: eine weitere Ausführungsform der Erfindung mit einem Ringmagnet und
- Fig. 6: eine weitere Ausführungsform der Erfindung mit über den Umfang verteilten Zylindermagneten.

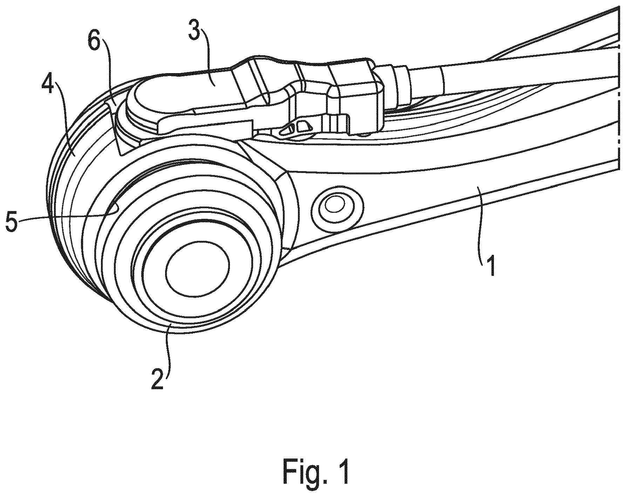

Fig. 1 zeigt in einer 3D-Darstellung einen Lenker 1 (teilweise) eines Fahrwerks eines Kraftfahrzeuges mit einem als Kugelhülsengelenk 2 ausgebildeten Schwenklager 2 und einem Sensor 3. Der Lenker 1, vorzugsweise ein Querlenker 1, ist Teil eines Fahrwerks oder einer Radaufhängung einer Hinterachse eines Kraftfahrzeuges. Nach einer bevorzugten Ausführungsform ist der Lenker 1 über das Kugelhülsengelenk 2 an einem nicht dargestellten Radträger befestigt. Der Lenker 1 weist ein ringförmig ausgebildetes Auge 4 mit einer Aufnahmeöffnung 5 auf, in welcher das Kugelhülsengelenk 2 aufgenommen ist. In den Außenumfang des Auges 4 ist eine Tasche 6 eingearbeitet, welche den Sensor 3 aufnimmt.

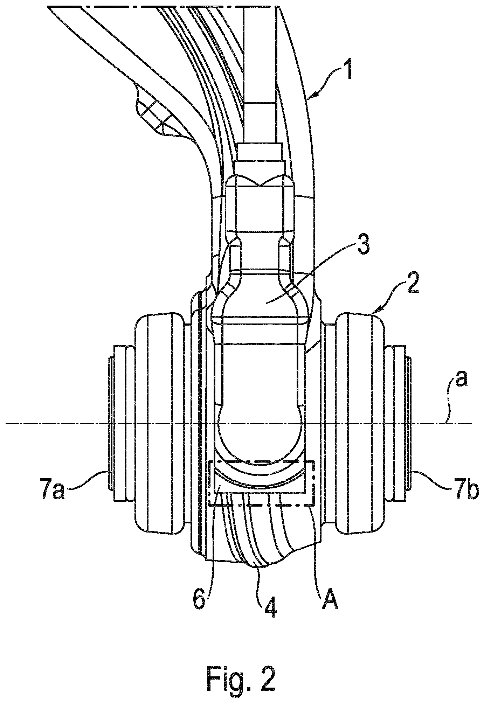

Fig. 2 zeigt den Lenker 1 in einer Ansicht von oben, aus welcher die Anordnung des Sensors 3 auf dem Lenker 1 deutlich erkennbar ist. Die Achse des Kugelhülsengelenks 2 ist mit a bezeichnet und wird im Folgenden auch Schwenkachse a genannt, weil der Lenker 1 vornehmlich eine Schwenkbewegung um die Schwenkachse a ausführt. Aufgrund der Ausbildung des Schwenklagers als Kugelhülsengelenk 2 sind jedoch auch Schwenkbewegungen um Querachsen zur Längsachse a möglich. Das Kugelhülsengelenk 2 weist eine Kugelhülse auf, die in Fig. 2 nur teilweise, nämlich mit ihren äußeren, über die Breite des Lenkerauges 4 hinaus stehenden Stirnenden 7a, 7b sichtbar ist. Die Kugelhülse ist mit ihren beiden Stirnenden 7a, 7b zwischen nicht dargestellten Lagerböcken des Radträgers eingespannt. Die Tasche 6 ist - wie aus der Ansicht von oben erkennbar ist - an die Form des Sensors 3 angepasst, so dass dieser eine seitliche Führung und damit auch eine Sicherung gegen Verdrehen erhält. Das Gehäuse des Sensors 3 kann an seiner Stirnseite, angedeutet durch ein Rechteck A, gegen eine Verschiebung in Richtung quer zur Schwenkachse a durch geeignete form- oder reibschlüssige Mittel gesichert werden.

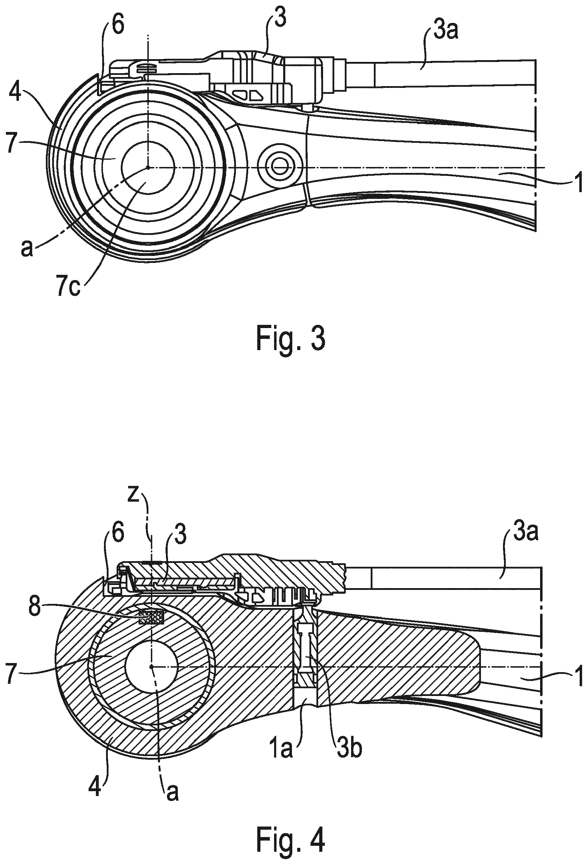

Fig. 3 zeigt den Lenker 1 mit teilweise geschnittenem, in der Tasche 6 aufgenommenen Sensor 3 mit Sensorkabel 3a in einer Ansicht in Richtung der Schwenkachse a. Die Kugelhülse 7, dargestellt durch einen Kreisringquerschnitt, weist eine Durchgangsöffnung 7c auf, über welche das Kugelhülsengelenk 2 über einen nicht dargestellten Bolzen mit dem Radträger verbunden wird. Damit ist die Kugelhülse 7 radträgerfest.

Fig. 4 zeigt den Lenker 1 in einer Schnittdarstellung, d. h. als Radialschnitt, senkrecht zur Schwenkachse a. Man erkennt, dass die Unterseite des Sensors 3 bzw. dessen Gehäuses flach auf dem Boden der Tasche 6 aufliegt, welche eine Vertiefung gegenüber dem Außenumfang des Lenkerauges 4 bildet. Der Sensor 3, welcher über das Kabel 3a mit einer nicht dargestellten elektronischen Auswerteeinheit verbunden ist, weist einen so genannten Sensordom 3b in Form eines abragenden Zapfens auf, welcher in einer Bohrung 1a des Lenkers 1 aufgenommen ist und somit eine Sicherung des Sensors 3 gegen Verdrehen bildet. Diese kann jedoch optional wegen der oben erwähnten Führungsfunktion der Tasche 6 entfallen. In der Kugelhülse 7 ist ein als zylinderförmiger Magnet 8 ausgebildeter Signalgeber 8 angeordnet, und zwar radial innerhalb des Sensors 3, wobei ein relativ geringer Abstand zwischen dem Signalgeber 8 und dem Sensor 3 besteht, welcher als magnetempfindlicher Sensor 3, kurz Magnetsensor 3 genannt, und nach einer bevorzugten Ausführungsform als Hall-Sensor 3 ausgebildet ist. Die Pole des Magneten 8 sind auf einer Zylinderachse z angeordnet, welche radial ausgerichtet ist. Der Magnet 8 ist bevorzugt als Permanentmagnet 8 ausgebildet und erzeugt ein Magnetfeld, dessen Feldlinien im Wesentlichen radial ausgerichtet sind und in Wirkverbindung mit dem Magnetsensor 3 stehen. Bei einer Änderung des Magnetfeldes, hervorgerufen durch eine Relativbewegung zwischen Lenker 1 und Kugelhülse 7, wird ein Signal erzeugt. Bei der Montage des Kugelhülsengelenks 2, insbesondere der Kugelhülse 7 mit dem Magneten 8 (dem einzigen auf dem Umfang) muss durch eine Justierung sichergestellt werden, dass sich der Magnet 8 im "Sichtbereich" des Sensors 3 befindet.

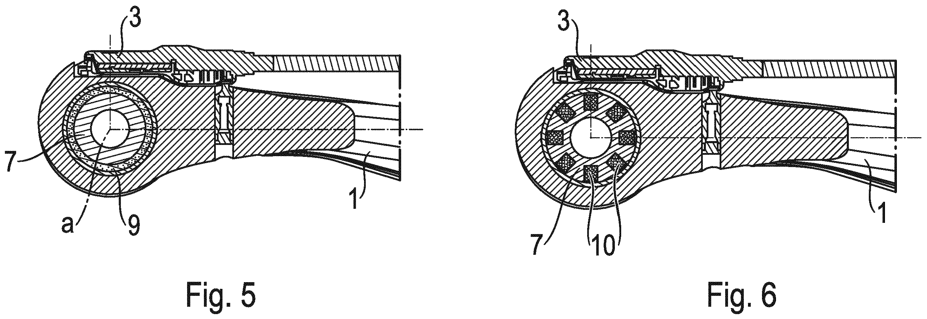

Fig. 5 zeigt ein zweites Ausführungsbeispiel der Erfindung, welches weitestgehend dem vorherigen Ausführungsbeispiel entspricht, daher werden für gleiche Teile die gleichen Bezugszahlen verwendet. Statt des zylinderförmig ausgebildeten Permanentmagneten 8 (Fig. 4) ist hier ein Ringmagnet 9 vorgesehen, der koaxial zur Kugelhülsenachse a in der Kugelhülse 7 angeordnet ist. Das Magnetfeld des Ringmagneten 8 steht derart mit dem Sensor 3 in Wirkverbindung, dass eine Relativbewegung zwischen Ringmagnet 9 und Sensor 3 zur Auslösung eines Signals führt. Vorzugsweise ist der Ringmagnet als Polrad ausgebildet, wie es z. B. durch die DE 103 58 763 A1 der Anmelderin bekannt wurde. Dabei sind auf dem Umfang unterschiedlich magnetisierte Bereiche mit entgegengesetzter Orientierung vorgesehen.

Fig. 6 zeigt ein drittes Ausführungsbeispiel der Erfindung, welches sich von den vorherigen durch die Ausbildung des Signalgebers unterscheidet: Eine Vielzahl von Zylindermagneten 10 (in der Zeichnung acht, jeweils um 45 Grad versetzt) ist, über den Umfang gleichmäßig verteilt, in der Kugelhülse 7 angeordnet, wobei die Zylinderachsen radial ausgerichtet sind. Die von den Magneten 10 ausgehenden Magnetfelder stehen in Wirkverbindung mit dem Sensor 3.

Eine Justierung bei der Montage wie bei dem ersten Ausführungsbeispiel ist beim zweiten und dritten Ausführungsbeispiel nicht erforderlich, da bei jeder Winkelposition zwischen Kugelhülse 7 und Sensor 8 eine Wirkverbindung zwischen dem Ringmagneten 9 (Fig. 5) oder den Zylindermagneten 10 (Fig. 6) mit dem Sensor 3 besteht.

### Bezuaszeichen

- 1: Lenker
- 1a: Bohrung
- 2: Kugelhülsengelenk
- 3: Sensor
- 3a: Sensorkabel
- 3b: Sensordom
- 4: Auge
- 5: Aufnahmeöffnung
- 6: Tasche
- 7: Kugelhülse
- 7a: Stirnende
- 7b: Stirnende
- 8: Signalgeber/Magnet
- 9: Ringmagnet
- 10: Zylindermagnet

- A: Rechteck
- a: Schwenkachse
- z: Zylinderachse von Magnet 8

## Patentansprüche

1. Anordnung mit einer Winkelmesseinrichtung und mit einem Fahrwerk eines Fahrzeuges, wobei das Fahrwerk einen Lenker (1) und ein Schwenklager (2) mit einer Schwenkachse (a) umfasst, wobei der Lenker (1) um die Schwenkachse (a) schwenkbar ist und wobei die Winkelmesseinrichtung einen Sensor (3) und einen Signalgeber (8, 9, 10) umfasst, wobei der Sensor (3) am Lenker (1) im Bereich der Schwenkachse (a) und der Signalgeber (8, 9, 10) am Schwenklager (2) angeordnet sind und der Lenker (1) lagerseitig ein ringförmig ausgebildetes Auge (4) mit einer Aufnahmeöffnung (5) für das Schwenklager (2) aufweist, und das Auge (4) eine Außenfläche aufweist und der Sensor (3) auf der Außenfläche angeordnet und befestigt ist, wobei die Außenfläche eine Tasche (6) aufweist, in welcher der Sensor (3) geführt und gehalten ist, wobei die Tasche (6) in Form einer Vertiefung in die Außenfläche des Auges (4) eingearbeitet ist, so dass der Sensor (3) auf dem Lenker (1) eine Führung erhält, wobei die Tasche (6) an die Form des Sensors (3) angepasst ist, so dass dieser eine seitliche Führung und damit auch eine Sicherung gegen Verdrehen erhält, und die Tasche (6) zwei parallele Führungsflächen und eine stirnseitige Anschlagfläche aufweist, wobei eine dritte Seite offen ist, so dass der Sensor (3) in die Tasche (6) hineingeschoben und dort fixiert ist, und wobei eine Unterseite des Sensors (3) flach auf einem Boden der Tasche (6) aufliegt, welche als Vertiefung gegenüber dem Außenumfang des Auges (4) ausgebildet ist.

2. Anordnung nach Anspruch 1, wobei das Schwenklager als Kugelhülsengelenk (2) mit einer einen kugelförmigen Bereich aufweisenden Hülse (7) ausgebildet ist.

3. Anordnung nach Anspruch 2, wobei der Signalgeber (8, 9, 10) im kugelförmigen Bereich der Hülse (7) angeordnet ist.

4. Anordnung nach einem der Ansprüche 1 bis 3, wobei der Signalgeber als Permanentmagnet (8) ausgebildet ist.

5. Anordnung nach einem der Ansprüche 1 bis 4, wobei der Sensor als magnetempfindlicher Sensor (3), insbesondere als Hall-Sensor (3) ausgebildet ist.

6. Anordnung nach Anspruch 4 oder 5, wobei der Permanentmagnet als Zylinder (8) mit einer Zylinderachse (z) ausgebildet ist, welche in radialer Richtung in Bezug auf die Schwenkachse (a) angeordnet ist.

7. Anordnung nach Anspruch 4 oder 5, wobei der Signalgeber als Ringmagnet (9), insbesondere als Polrad (9), ausgebildet ist.

8. Anordnung nach Anspruch 4 oder 5, wobei der Signalgeber eine Vielzahl von auf dem Umfang angeordneten Magneten (10) umfasst.

## Claims

1. Arrangement with an angle measurement device and with a chassis of a vehicle, wherein the chassis comprises a control arm (1) and a pivot bearing (2) with a pivot axis (a),
wherein the control arm (1) is pivotable about the pivot axis (a) and wherein the angle measurement device comprises a sensor (3) and a signal emitter (8, 9, 10), wherein the sensor (3) is arranged on the control arm (1) in the region of the pivot axis (a) and the signal emitter (8, 9, 10) is arranged on the pivot bearing (2) and the control arm (1) has on the bearing side an annular eye (4) with a receiving opening (5) for the pivot bearing (2), and the eye (4) has an outer surface and the sensor (3) is arranged on and fixed to the outer surface, wherein the outer surface has a recess (6) in which the sensor (3) is guided and held, wherein the recess (6) is worked into the outer surface of the eye (4) in the form of a depression, so that the sensor (3) is provided with guidance on the control arm (1), wherein the recess (6) is adapted to the form of the sensor (3), so that the latter is provided with lateral guidance and consequently also securement against twisting, and the recess (6) has two parallel guiding surfaces and a stopping surface on the end face, wherein a third side is open, so that the sensor (3) is pushed into the recess (6) and fixed there, and wherein an underside of the sensor (3) lies flat on a bottom of the recess (6), which is formed as a depression with respect to the outer circumference of the eye (4).

2. Arrangement according to Claim 1, wherein the pivot bearing is formed as a spherical sleeve joint (2) with a sleeve (7) having a spherical region.

3. Arrangement according to Claim 2, wherein the signal emitter (8, 9, 10) is arranged in the spherical region of the sleeve (7).

4. Arrangement according to one of Claims 1 to 3, wherein the signal emitter is formed as a permanent magnet (8) .

5. Arrangement according to one of Claims 1 to 4, wherein the sensor is formed as a magnetically sensitive sensor (3), in particular as a Hall sensor (3).

6. Arrangement according to Claim 4 or 5, wherein the permanent magnet is formed as a cylinder (8) with a cylinder axis (z), which is arranged in a radial direction relative to the pivot axis (a).

7. Arrangement according to Claim 4 or 5, wherein the signal emitter is formed as an annular magnet (9), in particular as a magnet wheel (9).

8. Arrangement according to Claim 4 or 5, wherein the signal emitter comprises a multiplicity of magnets (10) arranged on the circumference.

## Revendications

1. Ensemble comprenant un dispositif de mesure d'angle et un mécanisme de roulement d'un véhicule, le mécanisme de roulement comprenant un bras oscillant (1) et un palier de pivotement (2) pourvu d'un axe de pivotement (a), le bras oscillant (1) pouvant pivoter sur l'axe de pivotement (a) et le dispositif de mesure d'angle comprenant un capteur (3) et un transmetteur de signal (8, 9, 10), le capteur (3) étant disposé sur le bras oscillant (1) dans la région de l'axe de pivotement (a) et le transmetteur de signal (8, 9, 10) étant disposé sur le palier de pivotement (2) et le bras oscillant (1) comportant côté palier un œil annulaire (4) pourvu d'une ouverture de réception (5) destinée au palier de pivotement (2), et l'œil (4) ayant une surface extérieure et le capteur (3) étant disposé et fixé sur la surface extérieure, la surface extérieure comportant une poche (6) dans laquelle le capteur (3) est guidé et maintenu, la poche (6) étant ménagée dans la surface extérieure de l'œil (4) sous la forme d'une dépression de façon à guider le capteur (3) sur le bras oscillant (1), la poche (6) étant adaptée à la forme du capteur (3) de façon à guider celui-ci latéralement et donc également à l'empêcher de tourner, et la poche (6) comportant deux surfaces de guidage parallèles et une surface de butée côté frontal, un troisième côté étant ouvert de sorte que le capteur (3) est poussé jusque dans la poche (6) où il est fixé, et un côté inférieur du capteur (3) venant en appui à plat sur un fond de la poche (6) qui est conçue comme une dépression opposée à la périphérie extérieure de l'œil (4) .

2. Ensemble selon la revendication 1, le palier de pivotement étant conçu sous la forme d'une articulation à rotule (2) comprenant un manchon (7) qui comporte une zone sphérique.

3. Ensemble selon la revendication 2, le transmetteur de signal (8, 9, 10) étant disposé dans la zone sphérique du manchon (7).

4. Ensemble selon l'une des revendications 1 à 3, le transmetteur de signal étant conçu sous la forme d'un aimant permanent (8).

5. Ensemble selon l'une des revendications 1 à 4, le capteur étant conçu sous la forme d'un capteur magnétiquement sensible (3), en particulier sous la forme d'un capteur à effet Hall (3).

6. Ensemble selon la revendication 4 ou 5, l'aimant permanent étant conçu sous la forme d'un cylindre (8) pourvu d'un axe de cylindre (z) qui est disposé dans la direction radiale par rapport à l'axe de pivotement (a).

7. Ensemble selon la revendication 4 ou 5, le transmetteur de signal étant conçu sous la forme d'un aimant annulaire (9), en particulier sous la forme d'une roue polaire (9).

8. Ensemble selon la revendication 4 ou 5, le transmetteur de signal comprenant un grand nombre d'aimants (10) disposé sur la périphérie.
